# FASCICULE DE BREVET EUROPEEN

(11) **EP 2 496 442 B1**
(45) Date de publication et mention de la délivrance du brevet: **10.12.2014**
(21) Numéro de dépôt: 10787838.1
(22) Date de dépôt: 22.10.2010
(51) Int. Cl.: B60P 7/08, B60P 7/13

(54) **DISPOSITIF DE RECEPTION POUR CONTENEUR**
VORRICHTUNG ZUR AUFNAHME EINES KONTAINERS
DEVICE FOR HOLDING A CONTAINER

(30) Priorité: 02.11.2009 FR 0957740; 01.12.2009 FR 0958543
(43) Date de publication de la demande: 12.09.2012
(73) Titulaire: Envision Vehicle Engineering Novasio Technology Event, 70400 Hericourt (FR)
(72) Inventeur: HECKY, Stéphane, F-90300 Eloie (FR); FENIX, Reginald, F-70400 Champey (FR)
(74) Mandataire: Rhein, Alain
(86) Numéro de dépôt international: PCT/FR2010/052270
(87) Numéro de publication internationale: WO 2011/051608

(56) Documents cités:
- DE-U1- 20 012 977
- DE-U1- 29 909 687
- DE-U1-202008 012 739
- FR-A1- 2 919 542
- US-A- 5 501 556
- US-A1- 2001 038 777

## Description

L'invention concerne un dispositif de réception pour conteneur sur un châssis de véhicule de transport, notamment portuaire, ledit châssis s'étendant selon une direction longitudinale parallèle au sol et comportant, de part et d'autre d'un plan médian perpendiculaire au sol et parallèle à ladite direction longitudinale, une première et une seconde bordures d'extrémité latérale, ledit dispositif comportant, de part et d'autre dudit plan médian, au moins un premier guide latéral conçu apte à constituer une butée pour un conteneur, et au moins un second guide latéral conçu apte à constituer une butée pour un conteneur.

La présente invention entre dans le domaine de la manutention de conteneurs, au niveau d'installations portuaires, aéroportuaires, ferroviaires, routières ou mixtes.

L'invention concerne plus particulièrement un véhicule, sous la forme d'un automoteur, ou d'une remorque apte à être attelé à un véhicule tracteur, ce véhicule étant conçu apte à recevoir un ou plusieurs conteneurs de type maritime standardisés, servis par des moyens de chargement tels que palonniers de grue ou de pont appelés spreaders, ou encore par des engins de levage tels que chariots élévateurs, ou engins spéciaux portuaires.

L'immobilisation d'un navire au quai est très coûteuse, et tout est mis en oeuvre, dans les grands ports, pour réduire au minimum les opérations de déchargement et de chargement.

Le déchargement des navires s'effectue avec des grues, qui ont maintenant des palonniers mouflés, dits spreaders, capables de prendre plusieurs conteneurs à la fois, soit alignés, soit en parallèle, soit encore en plusieurs rangées de conteneurs alignés.

Faute de moyens de réception adaptés, ces spreaders déposent en général les conteneurs au sol. Les conteneurs sont repris par des grues ou par des spreaders pour deux conteneurs alignés selon leur longueur, pour être redéposés sur une remorque classique conçue pour un conteneur de 40 pieds, ou pour deux conteneurs de 20 pieds, selon la norme ISO 668.

Les conteneurs sont généralement saisis dans leur partie supérieure par les engins de manutention, et déposés, le plus rapidement possible, sur les moyens de réception constitués par des remorques tractées, des wagons, ou encore des automoteurs, qui les transporteront sur leur lieu d'utilisation ultérieure.

La manutention sur les ports se fait généralement par trains de remorques. La dépose de chaque conteneur, ou de chaque groupe de conteneurs, doit donc être la plus rapide possible. Dans un but de productivité, il n'est pas rare qu'un manutentionnaire, après avoir effectué son approche de positionnement, vienne à lâcher un conteneur avant que celui-ci ne repose entièrement sur son moyen de réception. Un tel largage peut être fait, par exemple, à 20 centimètres au-dessus de la zone de réception. La manoeuvre étant très rapide, il se peut tout aussi bien, à l'inverse, que la dépose se fasse avec une poussée descendante verticale, ou même oblique, sous l'effet du poids et de l'inertie de l'engin de manutention. En particulier, il convient de considérer le cas où la masse du spreader vient, momentanément, s'ajouter à celle du ou des conteneurs qu'il dépose. On comprend que les véhicules, notamment remorques, portuaires souffrent beaucoup de tels traitements, qui abrègent leur durée de vie.

De plus il est connu d'implanter, sur les bordures des longerons que comportent de tels véhicules portuaires, des guides conteneurs servant à l'opération de réception et de déchargement de ces derniers. De tels guides sont montés sur des bras s'étendant extérieurement au gabarit du véhicule.

On comprend bien que cette augmentation de l'encombrement général du véhicule devient gênante lorsque l'on doit transporter ce véhicule de son lieu de fabrication à son lieu d'utilisation. En effet les guides latéraux du véhicule ne permettent plus à ce dernier de pouvoir être transporté dans un conteneur standardisé répondant à la norme NF ISO 668.

De ce fait l'on se voit dans l'obligation d'utiliser un navire vraquier représentant un coût de transport bien plus élevé que celui pour le transport de ce véhicule dans un conteneur.

On notera que l'on connait tout particulièrement par le document DE-U1-299.09.687 un châssis de véhicule de transport, notamment portuaire, comportant, de part et d'autre d'un plan médian longitudinal et en bordures d'extrémité latérale des guides latéraux, de nature amovible et conçus apte à constituer une butée pour un conteneur.

L'invention a pour but de pallier les inconvénients de l'état de la technique en proposant un dispositif d'équipement d'un véhicule, notamment une remorque ou un automoteur, conçu et calculé pour supporter les impulsions consécutives aux manoeuvres brutales du manutentionnaire, aussi bien lors de chocs frontaux que lors de chocs verticaux, tout en assurant un bon positionnement et un bon centrage de chaque charge, ainsi qu'un véhicule ainsi équipé. De façon préférée, le véhicule selon l'invention comporte des guides latéraux et est conçu apte à se loger dans un conteneur ISO 668.

A cet effet, l'invention concerne un dispositif de réception pour conteneur sur un châssis de véhicule de transport, notamment portuaire, ledit châssis s'étendant selon une direction longitudinale parallèle au sol et comportant, de part et d'autre d'un plan médian perpendiculaire au sol et parallèle à ladite direction longitudinale, une première et une seconde bordures d'extrémité latérale, ledit dispositif comportant, de part et d'autre dudit plan médian, au moins un premier guide latéral conçu apte à constituer une butée pour un conteneur, et au moins un second guide latéral conçu apte à constituer une butée pour un conteneur, caractérisé par le fait qu'au moins ledit premier guide latéral ou au moins ledit second guide latéral est amovible et conçu apte à être rapporté de façon saillante, respectivement par rapport à ladite première bordure ou à ladite seconde bordure d'extrémité, sur ledit châssis par l'intermédiaire d'au moins une platine elle-même fixée de façon saillante vers l'extérieur respectivement sur ladite première bordure ou sur ladite seconde bordure d'extrémité.

Selon d'autres caractéristiques de l'invention, au moins le premier ou au moins le second guide latéral coopère avec une ou plusieurs platines, la ou les platines comportant des moyens de réception, d'appui et de fixation.

Selon une autre caractéristique de l'invention, la platine est incorporée à une traverse ou à un cadre, s'étendant perpendiculairement au plan médian, que comporte ledit châssis.

Selon encore une autre caractéristique de l'invention, ladite traverse ou ledit cadre est amovible.

L'invention concerne encore un véhicule équipé d'un tel dispositif.

D'autres caractéristiques et avantages de l'invention ressortiront de la description détaillée qui va suivre des modes de réalisation non limitatifs de l'invention, en référence aux figures annexées dans lesquelles :
- la figure 1 représente, de façon schématisée et en perspective, le dispositif de réception selon l'invention ;
- la figure 2 représente, de façon schématisée et en perspective, un châssis d'un véhicule portuaire comprenant le dispositif selon l'invention;
- la figure 3 représente, de façon schématisée et en perspective, une platine que comporte le dispositif selon l'invention ;
- la figure 4 représente, de façon schématisée et en perspective, une platine du dispositif de réception selon un mode d'exécution de l'invention ;
- la figure 5 représente, de façon schématisée et en perspective, un cadre constitué de traverses et comportant au moins une platine que comporte le dispositif selon l'invention ;
- la figure 6 représente, de façon schématisée et en perspective, une traverse amovible selon différents modes d'exécution du dispositif de réception selon l'invention ; et
- la figure 7 représente, de façon schématisée et en perspective, un cadre amovible selon un mode d'exécution de l'invention.

L'invention concerne un dispositif de réception pour conteneur sur un châssis de véhicule de transport.

La présente invention entre dans le domaine de la manutention de conteneurs, au niveau d'installations portuaires, aéroportuaires, ferroviaires, routières ou mixtes.

Des modes de réalisation préférés de l'invention sont illustrés sur les figures.

Le dispositif de réception 1 pour conteneur est monté sur un châssis 2 d'un véhicule de transport 3, notamment portuaire.

Un tel véhicule 3 peut être conçu sous la forme d'une remorque ou d'un automoteur comportant des moyens de roulement.

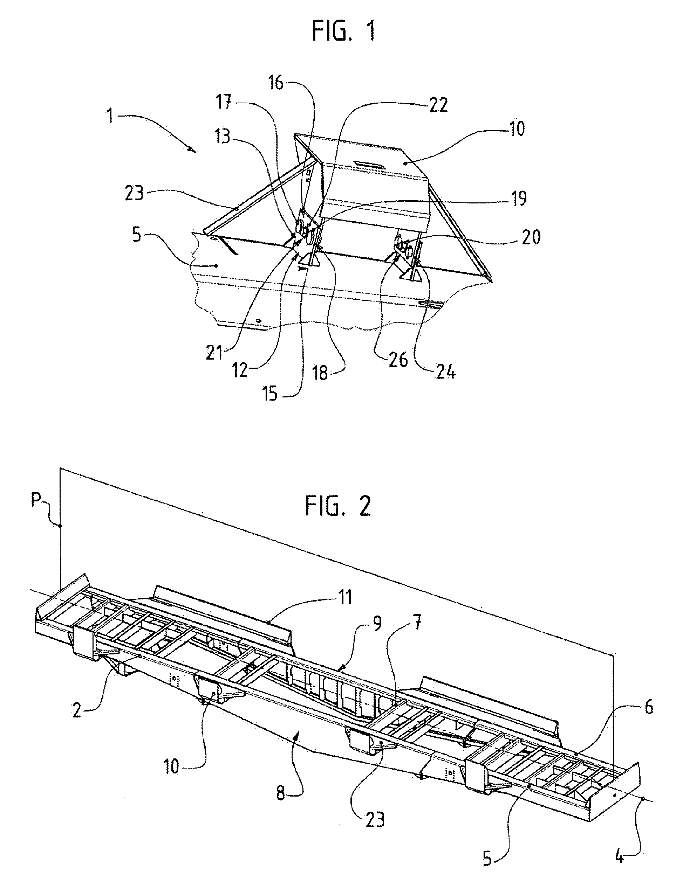

Pour en revenir au châssis 2 et tel que visible sur la figure 2, celui-ci s'étend selon une direction longitudinale 4 parallèle au sol et présente avantageusement la forme d'une structure centrale en échelle et ayant des dimensions adaptées à la réception de conteneurs, notamment de 20 pieds, 30 pieds ou encore 40 pieds selon la norme ISO 668. L'invention permet précisément l'adaptation aisée d'un véhicule à des formats de conteneurs différents, et notamment de longueurs peu courantes, les largeurs étant quant à elles standardisées.

A ce propos, on observera que ce châssis 2 comporte au moins deux longerons 5 et 6 s'étendant parallèlement au plan médian P et des traverses 7, s'étendant perpendiculairement au plan médian P.

Préférentiellement, il comporte, de part et d'autre, d'un plan médian P perpendiculaire au sol et parallèle à la direction longitudinale 4 une première bordure d'extrémité latérale 8 et une seconde bordure d'extrémité latérale 9.

D'une manière avantageuse, les longerons 5 et 6 définissent, respectivement, la première bordure 8 et la seconde bordure d'extrémité latérale 9 dans la direction longitudinale 4 du châssis 2.

Avantageusement et toujours tel que visible sur la figure 2, le dispositif de réception 1 comporte encore, de part et d'autre du plan médian P, au moins un premier guide latéral 10 conçu apte à constituer une butée pour un conteneur, et au moins un second guide latéral 11 là encore conçu apte à constituer une butée pour un conteneur. Ces guides 10 et 11 peuvent adopter une forme plus haute ou plus large de façon à s'adapter aux conteneurs présents sur le châssis 2.

Tout particulièrement selon l'invention au moins le premier guide latéral 10 ou au moins le second guide latéral 11 est amovible et conçu apte à être rapporté de façon saillante, respectivement par rapport à ladite première bordure 8 ou à ladite seconde bordure d'extrémité 9, sur ledit châssis 2 par l'intermédiaire d'au moins une platine 12 elle-même fixée de façon saillante vers l'extérieur respectivement sur la première bordure d'extrémité 8 ou sur la seconde bordure d'extrémité 9.

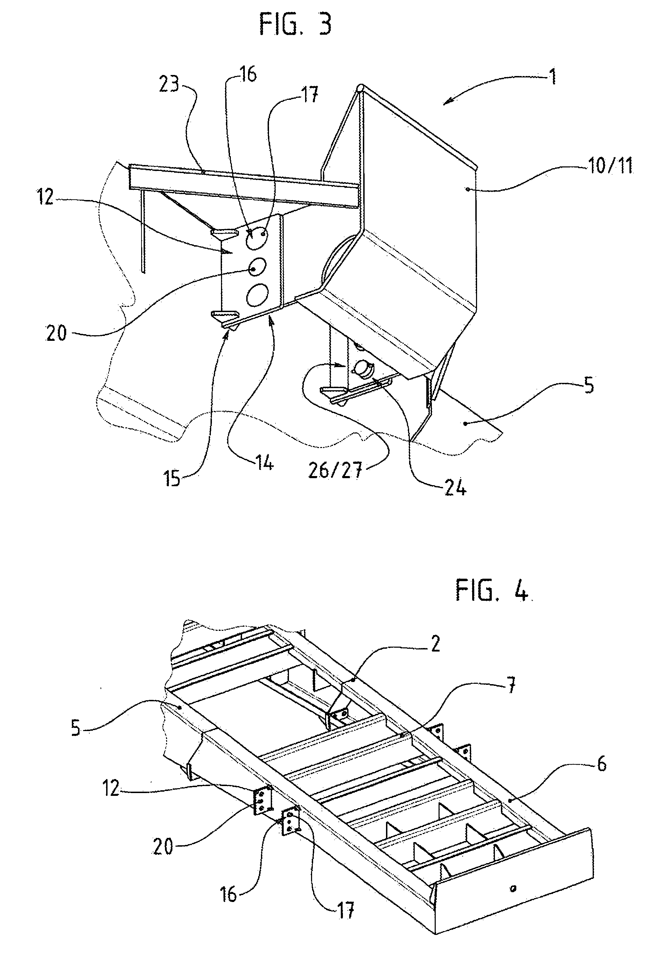

D'ailleurs et tel que visible sur la figure 3, la platine 12 se présente sous la forme d'une tôle 13 d'une forme quelconque mais préférentiellement rectangulaire fixée ou soudée sur la première bordure 8 ou la seconde bordure d'extrémité latérale 9 définie, respectivement, par les longerons 5 et 6.

Avantageusement, cette platine 12 comporte des moyens de réception 14 conçus aptes à coopérer avec un guide, notamment au moins le premier guide latéral 10 ou au moins le second guide latéral 11.

D'une manière avantageuse, la platine 12 comporte encore des moyens d'appui 15 se présentant sous la forme d'un rebord s'étendant sur tout ou partie de la platine 12 sur lequel vient reposer, en tout ou partie, le premier 10 ou le second 11 guide latéral lorsque ce dernier est en position montée.

Selon une autre caractéristique de l'invention, la platine 12 comporte des moyens de positionnement 16, réalisés préférentiellement sous la forme d'au moins un alésage 17, et de préférence deux alésages, pour le passage de moyens d'alignement 18 tels qu'au moins un pion ou au moins une goupille 19.

Avantageusement, la platine 12 comporte, encore, au moins un passage 20, là encore sous la forme d'un alésage 17 ou d'une ouverture, pour le passage de moyens de fixation 21 constitués par au moins une vis 22 ou un boulon ou similaire.

A ce propos, on observera qu'au moins le premier guide latéral 10 ou au moins le second guide latéral 11 comporte des pare-chocs glissière 23 constituant, avantageusement, une protection contre les accrochages et les chocs de la platine 12 lors des manoeuvres du véhicule ou des évolutions d'autres véhicules à proximité, pour éviter l'arrachement de la platine 12 ou/et du guide qu'elle supporte. Ces pare-chocs 23 protègent ainsi les moyens de réception 14, d'appui 15, de positionnement 16, et le passage 20 qui sont associés à cette platine 12.

Selon le mode de réalisation préféré de l'invention et toujours visible sur la figure 3, au moins le premier guide latéral 10 ou au moins le premier guide latéral 11 est fixé au châssis 2 par au moins deux platines 12. Les guides latéraux 10 et 11 sont donc, avantageusement, insérés le long des moyens de réception 14 jusqu'à venir d'une part en butée contre la première bordure d'extrémité 8 ou la seconde bordure d'extrémité 9 des longerons 5 et 6 et, d'autre part reposer en appui, en tout ou partie, sur les moyens d'appui 15 que comporte la platine 12.

D'une manière avantageuse et dans cette position, les moyens de positionnement 16 de la platine 12 sont alignés avec des moyens de positionnement complémentaires 24, sensiblement analogues aux moyens de positionnement 16, que comportent les premiers et seconds guides latéraux 10 et 11 et dans lesquels on vient insérer au moins une goupille 19. La goupille 19 étant conçue apte à coopérer avec les moyens de positionnement 16 et les moyens de positionnement complémentaires 24 pour leur mise en alignement.

Préférentiellement, au moins le premier guide latéral 10 ou le second guide latéral 11 comporte un passage 25 pour des moyens de fixation 21. Ce passage 25 est aligné avec le passage 20 de la platine 12 pour permettre l'insertion de la vis 22. Cette vis 22 est maintenue contre la paroi interne 26 ou 27, respectivement, du premier guide latéral 10 ou du second guide latérale 11 par un écrou ou similaire.

Selon un mode d'exécution préféré de l'invention, la vis 22 des moyens de fixation 21 est disposée entre deux goupilles 19 des moyens d'alignement 18, de façon à ce que la vis 22 ne soit pas sujette au cisaillement.

A ce propos, on observe que lorsque le ou les guides latéraux amovibles 10 et 11 sont en position montée par l'intermédiaire de la platine 12 sur le châssis 2, ce dernier présente un gabarit transversal supérieur de la longueur du ou des guides latéraux 10, 11.

De façon innovante, lors du transport du châssis 2 de son lieu de fabrication à son lieu d'utilisation, les premiers ou les seconds guides latéraux amovibles 10 et 11 sont démontés du châssis 2 de manière à réduire le gabarit de ce châssis 2 et de faciliter son transport.

Selon un premier mode d'exécution de l'invention tel que visible sur la figure 4, la ou les platines 12 sont incorporées à une des traverses 7 que comporte le châssis 2. Cette exécution permet, avantageusement, de profiter de la raideur de ces dernières.

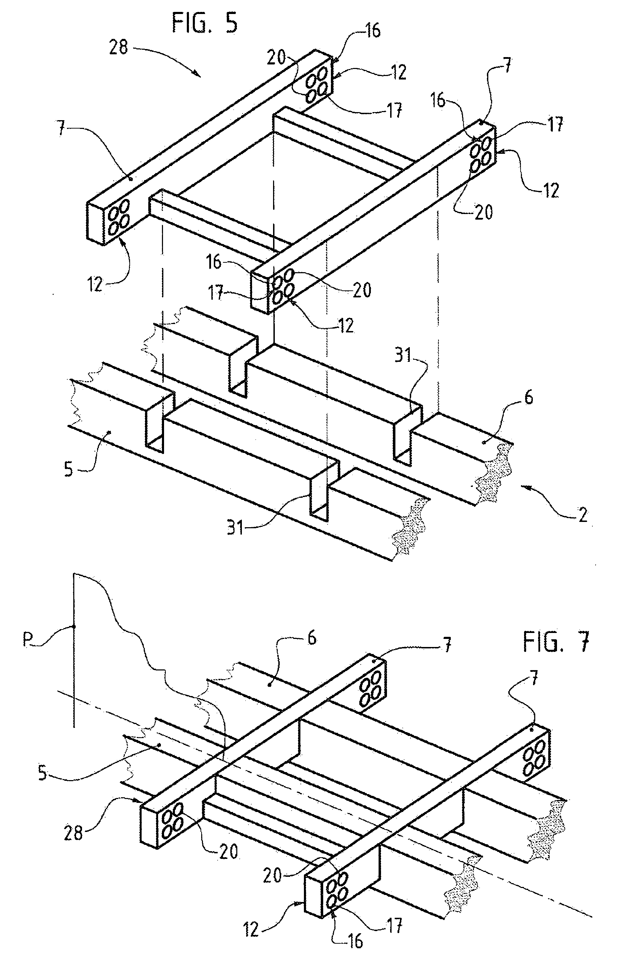

Selon un autre mode de d'exécution de l'invention et tel que visible sur la figure 5, la ou les platines 12 sont incorporées à un cadre 28 composés de plusieurs traverses 7 que comporte ledit châssis 2. Dans cette configuration chaque traverse 7 comporte une platine 12 à au moins une extrémité et la largeur des guides latéraux amovibles 10 et 11 sont adaptés à la distance séparant les traverses 7.

Selon un autre mode de réalisation, la traverse 7 ou le cadre 28 est amovible.

Plus particulièrement la traverse 7 ou le cadre 28 est conçu apte à coopérer avec un logement 29 que comporte ledit châssis 2.

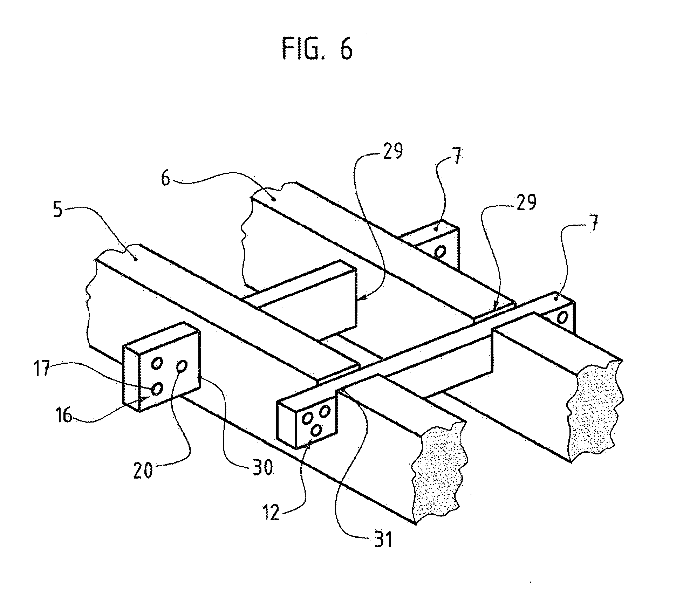

Selon un mode d'exécution de l'invention visible sur la figure 6, le logement 29 du châssis 2 est une ouverture 30 traversante mais non débouchante pour le passage d'une traverse 7 comportant au moins une platine 12. Cette ouverture 30 permet ainsi le montage et le démontage rapide et facile du dispositif de réception 1.

Avantageusement, cette ouverture est réalisée au niveau des longerons 5 et 6 du châssis 2 pour que l'on vienne enfiler selon une direction perpendiculaire au plan médian P et parallèle au sol une traverse 7 au travers des ouvertures 30 de façon à ce qu'elle traverse au moins une de ces dernières au niveau d'au moins d'une des deux bordures d'extrémité latérales que comporte le châssis 2.

Selon un second mode d'exécution de l'invention visible figure 6, le logement 29 est une fente 31 traversante et débouchante pour l'encastrement de la traverse 7 amovible ou du cadre 28 amovible par le dessus.

Préférentiellement, c'est au niveau des longerons 5 et 6 du châssis 2 qu'est réalisée la fente 31. Cette fente permet donc de venir disposer selon une direction parallèle ou perpendiculaire au plan médian P et respectivement perpendiculaire ou parallèle au sol la traverse 7 amovible, ou de disposer selon une direction parallèle au plan médian P et perpendiculaire au sol le cadre 28 amovible visible sur la figure 7.

L'invention concerne encore un châssis 2 comportant au moins un tel dispositif de réception 1 pour conteneur.

Avantageusement ce châssis 2 présente un encombrement maximal des extrémités de toutes lesdites platines 12 qu'il comporte et qui sont saillantes de ladite première et/ou seconde bordure d'extrémité latérale, selon une direction transversale parallèle au sol et perpendiculaire à ladite direction longitudinale 4, qui est inférieur au gabarit de largeur intérieure d'un conteneur de transport normalisé ISO 668.

L'invention concerne encore un véhicule comportant un châssis 2 comportant lui-même au moins un tel dispositif de réception 1 pour conteneur.

## Revendications

1. Dispositif de réception (1) pour conteneur sur un châssis (2) de véhicule de transport, notamment portuaire, ledit châssis (2) s'étendant selon une direction longitudinale parallèle au sol (4) et comportant, de part et d'autre d'un plan médian (P) perpendiculaire au sol et parallèle à ladite direction longitudinale (4), une première et une seconde bordures d'extrémité latérale (8, 9), ledit dispositif (1) comportant, de part et d'autre dudit plan médian (P), au moins un premier guide latéral (10) conçu apte à constituer une butée pour un conteneur, et au moins un second guide latéral (11) conçu apte à constituer une butée pour un conteneur, **caractérisé par le fait qu'**au moins ledit premier guide latéral (10) ou au moins ledit second guide latéral (11) est amovible et conçu apte à être rapporté de façon saillante, respectivement par rapport à ladite première bordure (8) ou à ladite seconde bordure d'extrémité (9), sur ledit châssis (2) par l'intermédiaire d'au moins une platine (12) elle-même fixée de façon saillante vers l'extérieur respectivement sur ladite première bordure (8) ou sur ladite seconde bordure d'extrémité (9).

2. Dispositif de réception (1) pour conteneur selon la revendication 1, **caractérisé par le fait qu'**au moins le premier (10) ou au moins le second guide latéral (11) coopère avec une ou plusieurs platines (12), la ou les platines (12) comportant des moyens de réception (14), d'appui (15), de positionnement (16) et de fixation (21).

3. Dispositif de réception (1) pour conteneur selon la revendication 1 ou 2, **caractérisé par le fait qu'**au moins le premier guide (10) ou au moins le second guide (11) comporte des pare-chocs glissière (23).

4. Dispositif de réception (1) pour conteneur selon l'une quelconque des revendications précédentes, **caractérisé par le fait que** la platine (12) est incorporée à une traverse (7) s'étendant perpendiculairement audit plan médian (P), ou à un cadre (28) que comporte ledit châssis (2).

5. Dispositif de réception (1) pour conteneur selon l'une des revendications précédentes, **caractérisé par le fait que** ladite traverse (7) est amovible et conçue apte à coopérer avec un logement (29) que comporte ledit châssis (2).

6. Dispositif de réception (1) pour conteneur selon la revendication 4, **caractérisé par le fait que** ladite traverse (7) ou ledit cadre (28) est amovible et conçu apte à coopérer avec un logement (29) que comporte ledit châssis (2).

7. Châssis (2) comportant au moins un tel dispositif de réception (1) pour conteneur selon l'une quelconque des revendications précédentes.

8. Châssis (2) selon la revendication précédente, **caractérisé par le fait que** l'encombrement maximal des extrémités de toutes lesdites platines (12) qu'il comporte et qui sont saillantes de ladite première (8) et/ou seconde bordures d'extrémité latérales (9), selon une direction transversale parallèle au sol et perpendiculaire à ladite direction longitudinale (4), est inférieur au gabarit de largeur intérieure d'un conteneur de transport normalisé ISO 668.

9. Véhicule comportant un châssis (2) selon la revendication 7 ou 8, comportant au moins un tel dispositif de réception (1) pour conteneur selon les revendications 1 à 6.

## Patentansprüche

1. Vorrichtung zur Aufnahme (1) eines Kontainers auf ein Fahrgestell (2) eines Transportfahrzeugs, nämlich Hafenfahrzeugs, wobei sich das Fahrgestell (2) in einer zu dem Boden (4) parallelen Längsrichtung erstreckt und auf beiden Seiten einer zum Boden senkrechten und zu der Längsrichtung (4) parallelen Mittelebene (P) einen ersten und einen zweiten seitlichen Endrandbereich (8, 9) umfasst, wobei die besagte Vorrichtung (1) auf beiden Seiten der besagten Mittelebene (P) mindestens eine erste seitliche Führung (10), die geeignet vorgesehen ist, um einen Anschlag ein für einen Kontainer zu bilden, und mindestens eine zweite seitliche Führung (11) umfasst, die geeignet vorgesehen ist, um einen Anschlag für einen Kontainer zu bilden, **dadurch gekennzeichnet, dass** zumindest die besagte erste seitliche Führung (10) oder zumindest die zweite seitliche Führung (11) abnehmbar und geeignet vorgesehen ist, über wenigstens eine Befestigungsplatte (12), die ihrerseits nach außen vorspringend an dem besagten ersten Endrandbereich (8), beziehungsweise dem besagten zweiten Endrandbereich (9) befestigt ist, vorspringend bezüglich dem besagten ersten Endrandbereich (8), beziehungsweise dem besagten zweiten Endrandbereich (9) an dem Fahrgestell (2) angebracht zu werden.

2. Vorrichtung zur Aufnahme (1) eines Kontainers nach Anspruch 1, **dadurch gekennzeichnet, dass** zumindest die erste (10) oder zumindest die zweite seitliche Führung (11) mit einer oder mehreren Befestigungsplatten (12) zusammenwirkt, wobei die Befestigungsplatte bzw. Befestigungsplatten (12) Mittel zur Aufnahme (14), zum Tragen (15), zum Positionieren (16) und zur Befestigung (21) umfassen.

3. Vorrichtung zur Aufnahme (1) eines Kontainers nach Anspruch 1 oder 2, **dadurch gekennzeichnet, dass** zumindest die erste Führung (10) bzw. zumindest die zweite Führung (11) Gleitstoßleisten (23) umfasst.

4. Vorrichtung zur Aufnahme (1) eines Kontainers nach irgendeinem der vorhergehenden Ansprüche, **dadurch gekennzeichnet, dass** die Befestigungsplatte (12) in einem Querträger (7) senkrecht zu der besagten Mittelebene (P), oder einem Rahmen (28), den das Fahrgestell (2) umfasst, eingefügt ist.

5. Vorrichtung zur Aufnahme (1) eines Kontainers nach einem der vorhergehenden Ansprüche, **dadurch gekennzeichnet, dass** der besagte Querträger (7) abnehmbar und geeignet vorgesehen ist, um mit einer Ausnehmung (29), die das besagte Fahrgestell (2) umfasst, zusammenzuwirken.

6. Vorrichtung zur Aufnahme (1) eines Kontainers nach Anspruch 4, **dadurch gekennzeichnet, dass** der besagte Querträger (7) bzw. der besagte Rahmen (28) abnehmbar und geeignet vorgesehen ist, um mit einer Ausnehmung (29), die das besagte Fahrgestell (2) umfasst, zusammenzuwirken.

7. Fahrgestell (2), umfassend wenigstens eine solche Vorrichtung zur Aufnahme (1) eines Kontainers nach irgendeinem der vorhergehenden Ansprüche.

8. Fahrgestell (2) nach dem vorhergehenden Anspruch, **dadurch gekennzeichnet, dass** der maximale Platzbedarf der Enden der sämtlichen besagten Befestigungsplatten (12), die es umfasst und die bezüchlich dem ersten (8) und/oder dem zweiten Endrandbereich (9) in einer zum Boden parallelen und zur Längsrichtung (4) senkrechten Querrichtung kleiner sind als das Format der inneren Breite eines ISO 668 genormten Transportkontainers.

9. Fahrzeug, umfassend ein Fahrgestell (2) nach Anspruch 7 oder 8, umfassend zumindest eine solche Vorrichtung zur Aufnahme (1) eines Kontainers nach den Ansprüchen 1 bis 6.

## Claims

1. Receiving device (1) for a container on a chassis (2) of a transport vehicle, namely harbour vehicle, said chassis (2) extending in a longitudinal direction parallel to the ground (4) and including, on both sides of a median plane (P) perpendicular to the ground and parallel to said longitudinal direction (4), a first and a second side end edge (8, 9), said device (1) including, on both sides of said median plane (P), at least a first side guide (10) designed capable of forming a stop for a container, and at least a second side guide (11) designed capable of forming a stop for a container, **characterised in that** at least said first side guide (10) or at least said second side guide (11) is removable and designed capable of being inserted protruding with respect to said first end edge (8) or to said second end edge (9), respectively, on said chassis (2) through at least one plate (12) fixed, in turn, protruding outwardly on said first end guide (8) or on said second end guide (9), respectively.

2. Receiving device (1) for a container according to claim 1, **characterised in that** at least the first (10) or at least the second side guide (11) cooperates with one or several plates (12), the plate or plates (12) including receiving (14), bearing (15), positioning (16) and fastening (21) means.

3. Receiving device (1) for a container according to claim 1 or 2, **characterised in that** at least the first (10) or at least the second side guide (11) includes bumper slides (23).

4. Receiving device (1) for a container according to any of the preceding claims, **characterised in that** the plate (12) is incorporated into a cross beam (7) extending perpendicular to said median plane (P), or into a frame (28) said chassis (2) includes.

5. Receiving device (1) for a container according to any of the preceding claims, **characterised in that** said cross beam (7) is removable and designed capable of cooperating with a recess (29) said chassis (2) includes.

6. Receiving device (1) for a container according to claim 4, **characterised in that** said cross beam (7) or said frame (28) is removable and designed capable of cooperating with a recess (29) said chassis (2) includes.

7. Chassis (2) including at least one such receiving device (1) for a container according to any of the preceding claims.

8. Chassis (2) according to the preceding claim, **characterised in that** the maximum size of the ends of all said plates (12) it includes and which are protruding from said first (8) and/or second side end edges (9), in a transversal direction parallel to the ground and perpendicular to said longitudinal direction (4), is smaller than the size of the inner width of a standardised ISO 668 transport container.

9. Vehicle including a chassis (2) according to claim 7 or 8, including at least one such receiving device (1) for a container according to claims 1 to 6.
